Europäisches Patentamt

European Patent Office

Office européen des brevets

(11) Veröffentlichungsnummer: **0 398 152**
**A2**

## (12) EUROPÄISCHE PATENTANMELDUNG

(21) Anmeldenummer: 90108774.2

(22) Anmeldetag: **10.05.90**

(51) Int. Cl.5: **A01B 19/06**

(30) Priorität: **19.05.89 DE 3916299**

(43) Veröffentlichungstag der Anmeldung:
**22.11.90 Patentblatt 90/47**

(84) Benannte Vertragsstaaten:
**BE DE FR GB IT NL**

(71) Anmelder: **Amazonen-Werke H. Dreyer GmbH**

**& Co. KG
Am Amazonenwerk 9-13
D-4507 Hasbergen-Gaste(DE)**

(72) Erfinder: **Higgen, Reinhard
Gartenstrasse 1
D-2872 Hude 1(DE)**

(54) **Zapfwellengetriebene Rüttelegge.**

(57) Zapfwellengetriebene Rüttelegge mit einem Getriebegehäuse, in dem zumindest ein Taumelkörperantrieb zum Antrieb der quer zur Fahrtrichtung sich erstreckenden Eggenbalken in hin- und hergehende Bewegungen angeordnet ist, wobei in dem Getriebegehäuse die Antriebsschwinge den hin- und hergehenden Antrieb der Eggenbalken gelagert ist, welche mittels eines Lagers auf der Unterseite der Gabelschwinge in dem Getriebegehäuse gelagert ist. Um auf konstruktiv einfache Weise einen wesentlich ruhigeren Lauf der Rüttelegge, insbesondere des Schwingungsantriebes zu erreichen, ist vorgesehen, daß in gleicher Flucht mit der um eine senkrechte Achse hin- und her drehenden Gabelschwinge (5) ein weiteres Lager (7) zur Lagerung der Gabelschwinge (5) an/in dem Getriebegehäuse (4) angeordnet ist.

FIG. 2

EP 0 398 152 A2

## Zapfwellengetriebene Rüttelegge

Die Erfindung betrifft eine zapfwellengetriebene Rüttelegge gemäß des Oberbegriffes des Patentanspruches 1.

Eine derartige Rüttelegge ist beispielsweise durch das deutsche Gebrauchsmuster 82 01 995 bekannt. Bei dieser Rüttelegge ist die Gabelschwinge ausschließlich an der Unterseite im Getriebegehäuse und über den Taumelkörperantrieb auf der Antriebswelle gelagert. Hierdurch ergibt sich eine einfache und kompakte Ausführung des Taumelkörperantriebes, sowie des Getriebegehäuses. Um eine exakte Lagerung und Schwingung der Gabelschwinge zu erreichen ist es erforderlich, daß uie Lagerung des Taumelkörpers und der Gabelschwinge sehr genau eingestellt werden müssen. Es hat sich nun jedoch gezeigt, insbesondere bei Erhöhung der Eingangsdrehzahl und der hieraus resultierenden höheren Schwingungszahl der Eggenbalken der Ruttelegge bzw. der Gabelschwinge da die Schwingungen der Rüttelegge in einen Resunanzbereich kommen. Diese führt zur Zerstörung des Taumelkörperantriebes und der Gabelschwinge.

Der Erfindung liegt die Aufgabe zugrunde, auf konstruktiv einfache Weise einen wesentlich ruhigeren Lauf der Rüttelegge, insbesondere des Schwingungsantriebes zu erreichen.

Diese Aufgabe wird erfindungsgemäß dadurch gelöst, daß in gleicher Flucht mit der um eine senkrechte Achse hin- und herdrehenden Gabelschwinge ein weiteres Lager zur Lagerung der Gabelschwinge an/in dem Getriebegehäuse angeordnet ist. Durch diese erfindungsgemäße Maßnahme ergibt sich ein äußerst ruhiger Lauf der Rüttelegge und des Schwingungsantriebes auf einfachste Weise. Es ist eine erheblich höhere Schwingungszahl der Eggenbalken möglich, ohne daß es zu frühzeitigen Getriebeschäden etc. kommen kann.

In einer bevorzugten Ausführungsform ist vorgesehen, daß das weitere Lager auf der Oberseite der Gabelschwinge angeordnet ist und so die Gabelschwinge in der Deckelwand des Getriebegehäuses lagert, wobei das Lager auf einer die Gabel verbindenden Brücke angeordnet ist. Hierdurch ergibt sich eine äußerst einfache konstruktive Ausführung der erfingungsgemäßen Idee.

Es ist in erfindungsgemäßer Weise möglich, daß die Brücke an die Gabelenden der Gabel angeschraubt ist oder aber, daß uie Brücke einstückig mit den Gabelenden der Gabel verbunden ist. Auch ist es möglich, das weitere Lager unterhalb des anderen Lagers anzuordnen.

Weitere erfindungsgemäße Merkmale sind der Beispielsbeschreibung und der Zeichnung zu entnehmen. Hierbei zeigen

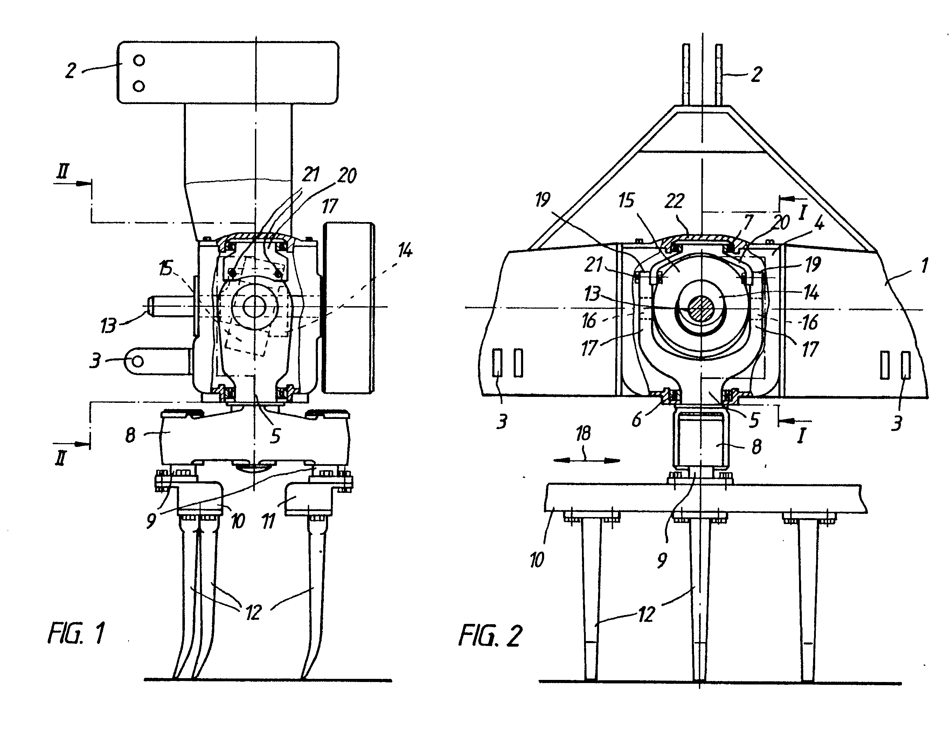

Fig. 1 die erfindungsgemäß ausgebildete Rüttelegge in der Seitenansicht und dem Schnitt I-I und

Fig. 2 die Rüttelegge in der Ansicht II-II.

Die Rüttelegge weist einen Rahmen 1 auf, an dem die Dreipunktkupplungselemente 2 und 3 angeordnet sind, über welche die Rüttelegge an den Dreipunktkraftheber eines Ackerschleppers anzukuppeln ist. Der Rahmen der Rüttelegge erstreckt sich quer zur Fahrtrichtung. In der Mitte des Rahmens 1 ist das Getriebegehäuse 4 angeordnet. In dem Getriebegehäuse 4 ist die Gabelschwinge 5 über die Lager 6 und 7 gelagert. An dem unteren Ende der Gabelschwinge 5 ist die Schwinge 8 angeordnet. Des weiteren sind im Außenbereich des Rahmens 1 weitere Schwingen 8 gelagert. An diesen Schwingen 8 sind über die Schwingwelle 9 jeweils die Eggenbalken 10 und 11 angeschraubt. An den Eggenbalken 10 und 11 befinden sich die Bodenbearbeitungszinken 12, welche an den Eggenbalken 10 und 11 angeschraubt sind. Die Eggenbalken 10 und 11 erstrecken sich quer zur Fahrtrichtung.

In dem Getriebegehäuse 4 ist außer der Gabelschwinge 5 die Antriebswelle 13 gelagert. Auf der Antriebswelle 13 ist der Taumelkörper 14 aufgekeilt und befestigt. Auf dem Taumelkörper 14 ist das Taumelkörpergehäuse 15 gelagert. Das Taumelkörpergehäuse 15 weist die beiden Lagerzapfen 16 auf. Auf den Lagerzapfen 16 sind die Gabeln 17 der Gabelschwinge 5 aufgesetzt. Über die Antriebswelle 13, welche über ein nicht dargestellte Gelenkwelle mit der Zapfwelle des die Ruttelegge ziehenden Schleppers verbunden ist wird der Taumelkörper 14 rotierend angetrieben. Durch den Taumelkörper 14 wird in Verbindung mit dem Taumelkörpergehäuse 15 die Gabelschwinge 5 in hin- und hergehende Bewegungen versetzt, so daß die Eggenbalken, wie durch den Doppelpfeil 18 angedeutet, in hin- und hergehende Schwingungen versetzt wird. Die Gabelschwinge 5 ist, wie bereits vorher erwähnt, durch das Lager 6 auf seiner Unterseite im Getriebegehäuse 4 gelagert. Die Gabelenden 19 sind über die Brücke 20 miteinander verbunden, indem die Brücke 20 über die Schrauben 21 mit den Gabelenden 19 der Gabel 17 der Gabelschwinge 5 verschraubt sind. Auf der Oberseite der Brücke 20 ist das weitere Lager 7 angeordnet, mit dem die Gabelschwinge 5 zusätzlich in der Deckelwand 22 des Gehäuses 4 gelagert ist. Hierdurch ist die Gabelschwinge 5 nicht mehr auf der Antriebswelle 13, wie beim Stand der der Technik, nur auf der Unterseite, sondern gleichzeitig auf der Unter- und Oberseite im Getriebegehäuse 4 unmittelbar gelagert, wodurch sich ein sehr ruhiger Drehschwingungsantrieb ergibt. Das obere Lager 7 ist in gleicher Flucht mit der um die senkrechte Achse hin- und herdrehenden Gabelschwinge 5 im Getriebegehäuse 4 angeordnet.

**Ansprüche**

1. Zapfwellengetriebene Rüttelegge mit einem Getriebegehäuse, in dem zumindest ein Taumelkörperantrieb zum Antrieb der quer zur Fahrtrichtung sich erstreckenden Eggenbalken in hin- und hergehende Bewegungen angeordnet ist, wobei in dem Getriebegehäuse die Antriebsschwinge den hin- und hergehenden Antrieb der Eggenbalken gelagert ist, welche mittels eines Lagers auf der Unterseite der Gabelschwinge in dem Getriebegehäuse gelagert ist, dadurch gekennzeichnet, daß in gleicher Flucht mit der um eine senkrechte Achse hin- und her drehenden Gabelschwinge (5) ein weiteres Lager (7) zur Lagerung der Gabelschwinge (5) an/in dem Getriebegehäuse (4) angeordnet ist.

2. Rüttelegge nach Anspruch 1, dadurch gekennzeichnet, daß das weitere Lager (7) auf der Oberseite der Gabelschwinge (5) angeordnet ist und so die Gabelschwinge (5) in der Deckelwand (22) des Getriebegehäuses (4) lagert, wobei das Lager (7) auf einer die Gabel (17) verbindenden Brücke (20) angeordnet ist.

3. Rüttelegge nach Anspruch 2, dadurch gekennzeichnet, daß die Brücke (20) an den Gabelenden (19) der Gabel (17) angeschraubt ist.

4. Rüttelegge nach Anspruch 2, dadurch gekennzeichnet, daß die Brücke einstückig mit den Gabelenden der Gabel verbunden ist.

5. Rüttelegge nach Anspruch 1, dadurch gekennzeichnet, daß das weitere Lager unterhalb des anderen Lagers angeordnet ist.

FIG. 1

FIG. 2